# EUROPÄISCHE PATENTSCHRIFT

(11) **EP 3 523 004 B1**
(45) Veröffentlichungstag und Bekanntmachung des Hinweises auf die Patenterteilung: **06.09.2023**
(21) Anmeldenummer: 18742722.4
(22) Anmeldetag: 04.07.2018
(51) Int. Cl.: B01D 25/21, B01D 25/164

(54) **ANORDNUNG EINER FILTERPLATTE UND EINES ANBAUTEILS**
ASSEMBLY COMPRISING A FILTER PLATE AND AN ATTACHMENT PART
ENSEMBLE CONSTITUÉ D'UNE PLAQUE FILTRANTE ET D'UNE FIXATION

(30) Priorität: 05.07.2017 DE 202017104018 U
(43) Veröffentlichungstag der Anmeldung: 14.08.2019
(73) Patentinhaber: JVK Filtration Systems GmbH, 91166 Georgensgmünd (DE)
(72) Erfinder: HERMANN, Manfred P., 90491 Nürnberg (DE); SALBAUM, Bernhard, 91187 Röttenbach (DE)
(74) Vertreter: Tergau & Walkenhorst Patentanwälte PartGmbB
(86) Internationale Anmeldenummer: PCT/EP2018/068094
(87) Internationale Veröffentlichungsnummer: WO 2019/008037

(56) Entgegenhaltungen:
- EP-A2- 0 357 015
- EP-A2- 0 384 081
- WO-A1-2011/051428
- DE-U1- 20 317 546
- GB-A- 2 176 418

## Beschreibung

Die vorliegende Erfindung betrifft eine Anordnung einer Filterplatte für eine Filterpresse und mindestens eines Anbauteils, wobei die Filterplatte eine Filterkammerbegrenzungsfläche aufweist, mit welcher eine in der Filterpresse zu bildende Filterkammer begrenzbar ist. In der Filterplatte ist dabei zumindest ein Kanal für eine Fluidverbindung zu der Filterkammerbegrenzungsfläche ausgebildet und das Anbauteil ist bei dem Kanal an der Filterplatte befestigt. Ferner betrifft die vorliegende Erfindung eine Anordnung einer solchen Filterplatte für eine Filterpresse und mindestens eines Anbauteils, bei der das Anbauteil mittels zumindest einer Schnappverbindung lösbar an der Filterplatte befestigt ist und eine Öffnung aufweist, die in dem Kanal angeordnet ist.

Es ist bekannt, für eine Filterpresse ein Filterpaket zu bilden, welches aus mehreren nebeneinander angeordneten Filterplatten besteht. Zwischen den Filterplatten werden jeweils Filterkammern gebildet. Die Filterplatten weisen hierfür eine zentrale Filterfläche und einen die zentrale Filterfläche umrahmenden Dichtrand auf. In der Filterpresse können die Filterplatten voneinander weg und aufeinander zu verfahren werden, wodurch die Filterkammern geöffnet und geschlossen werden können.

Jede Filterkammer weist üblicherweise zumindest einen Einlauf und einen Auslauf als Kanal zur Filterkammer auf. Über den Einlauf fließt die zu filternde Suspension, welche auch als Trübe bezeichnet wird, über den Einlaufkanal in die Filterkammer hinein. Die Suspension wird dann mittels eines Filtertuchs gefiltert, wobei die Feststoffe durch das Filtertuch in der Filterkammer zurückgehalten werden, so dass ein sogenannter Filterkuchen entsteht. Das von den Festkörpern befreite Filtrat wird über mindestens einen Auslaufkanal aus der Filterkammer herausgeleitet.

Um in einem speziellen Fall die Restfeuchte im Filterkuchen zu reduzieren und die Filtrationszeiten zu verkürzen, sind Filterpressen bekannt, bei denen zumindest eine Filterplatte eine Membran aufweist. Eine solche Filterplatte bezeichnet man als Membranfilterplatte. Bei einer Filterpresse mit Membranfilterplatten schließt sich an die zunächst durchgeführte Druckfiltration eine Pressfiltration an, bei der die elastischen Membranen der Filterkammern mit einem Druckmedium beaufschlagt werden, so dass sie den Raum, in welchem sich der Filterkuchen befindet, verengen. Auf diese Weise wird der Filterkuchen komprimiert, wodurch die Hohlräume des Filterkuchens verkleinert werden und dadurch die Restfeuchte in diesen Hohlräumen weiter verringert wird. Wenn eine Membranfilterplatte verwendet wird, sind bei einem Filterpaket eine so genannte Kammerfilterplatte und eine Membranfilterplatte, an welchen Filtertücher befestigt sind, paarweise nebeneinander angeordnet.

Eine solche Filterpresse ist beispielsweise in der WO 03/095063 A1 beschrieben. Bei der dort beschriebenen Filterpresse wird ein Plattenpaket gebildet, welches abwechselnd eine Kammerfilterplatte und eine Membranfilterplatte aufweist. Die Kammerfilterplatte weist auf beiden Seiten jeweils ein Filtertuch auf, welches jeweils in einer Aussparung des Grundkörpers der Filterplatte befestigt ist. Die Membranplatte weist auf beiden Seiten jeweils eine Membran und ein Filtertuch auf, welche auch in jeweils einer Aussparung auf beiden Seiten eines Grundkörpers der Membranfilterplatte befestigt ist. Bei der Filterpresse ist zwischen der Filterkammerbegrenzungsfläche der Kammerfilterplatte und der Membran der Membranfilterplatte eine Filterkammer gebildet. Zwischen der Membran und dem Grundkörper der Membranfilterplatte ist eine Drucckammer gebildet. Zwischen dem Filtertuch und der Filterkammerbegrenzungsfläche der Kammerfilterplatte kann in Richtung der Plattenebene ein Abstand vorgesehen, so dass eine Einlauföffnung für die zu filternde Suspension in die Filterkammer münden kann.

Zum Zuführen der zu filternden Suspension weisen die Filterplatten üblicherweise eine Bohrung auf. Im Montagezustand mehrerer Filterplatten in der Filterpresse bilden diese Bohrungen einen Einlaufkanal. Um die Suspension von dem Einlaufkanal in die Filterkammer einer Filterplatte zu leiten, ist als Anbauteil beispielsweise ein Verteilerring an der Filterplatte angeordnet. Benachbart zu dem Verteilerring kann ein Stützring oder ein weiterer Verteilerring angeordnet sein. Der Verteilerring und der Stützring sind mittels Verbindungselementen, z. B. Schrauben, an dem Grundkörper befestigt. Eine solche Anordnung eines Verteilerrings und eines Stützrings ist in der WO 2009/012884 A1 beschrieben.

Aus der DE 199 56 617 A1 ist eine Filterplatte für eine Filterpresse bekannt, die ein Befüllelement umfasst. Das Befüllelement weist Abzweigkanäle auf, die in eine Filterkammer einmünden. Das Befüllelement und die angrenzende Filterplatte weisen Nuten auf, in welche ein gummielastischer Dichtungsring eingesetzt ist.

Die DE 203 17 546 U1 beschreibt eine Filterplatten mit einem eine axiale Trübezuführöffnung einfassenden Stützring. Der Stützring weist Flanschteile auf, die nach Art einer Schnapp- oder Rastverbindung befestigt sind.

Die EP 2 493 587 B1 beschreibt eine Filterplatten mit einem Grundkörper und einem elastischen Element, welches ringartig mittels einer Schnappverbindung an dem Grundkörper befestigt ist. An dem elastischen Element ist eine Temperierplatte befestigt, die aus einem wärmeleitenden Material besteht.

Die EP 0 357 015 B1 beschreibt eine Membranfilterplatte für eine Filterpresse, bei der im Membranhalterahmen eine schwalbenschwanzförmige Ausnehmung ausgebildet ist, in welche ein schwalbenschwanzförmiger Membranrand eingreift. In dem schwalbenschwanzförmigen Membranrand ist wiederum eine Auskehlung vorgesehen, in welche ein Vorsprung eines Abdeckrahmens zur Befestigung des Abdeckrahmens an der Membran eingreift.

Aus der WO 2004/043569 A2 ist eine Membranfilterplatte bekannt, die eine Grundplatte mit verdicktem Randbereich, eine Membran aus einem elastisch verformbare Material und ein Filtertuch umfasst. Dabei weist die Membran einen Ringwulst auf, der in eine komplementär gestaltete Nut der Grundplatte eingreift.

Aus der WO 2011/051428 A1 ist eine Filterplatte mit einem Grundkörper und einem elastischen Element bekannt, welches ringartig und flüssigkeitsdicht an dem Grundkörper befestigt ist. Zur Befestigung ist eine schwalbenschwanzförmige Randwulst des elastischen Elements in einer Befestigungsnut des Grundkörpers aufgenommen. An dem elastischen Element eine Temperierplatte befestigt.

Aus der EP 0 357 015 A2 ist eine Membranfilterplatte für Filterpressen bekannt, bei der eine Membran mittels eines Abdeckrahmens an einer Membranhalteplatte befestigt ist. Hierfür ist der Membranrand im Querschnitt schwalbenschwanzartig geformt und greift mit seinem schwalbenschwanzförmigen Bereich in entsprechende schwalbenschwanzförmige Ausnehmungen der Membranhalteplatte.

Die GB 2 176 418 A beschreibt eine Membranplatte für eine Filterpresse, bei der ein Plattenrahmen und ein Halterahmen mittels eines Stiftes und eines Gummistopfens aneinander befestigt sind.

Aus der EP 0 384 081 A2 ist eine Vorrichtung zur Entwässerung durch Elektroosmose und Zusammenpressen bekannt.

Bei der Nutzung einer Filterplatte ist es erforderlich, Anbauteile abzunehmen und wieder neu zu montieren. Bei einem Wechsel des Filtertuchs muss beispielsweise der Verteilerring demontiert werden. Dabei hat sich herausgestellt, dass herkömmliche Befestigungen des Anbauteils an dem Grundkörper im Betrieb dazu führen, dass die Funktionalität der Filterplatte nach einer Demontage und erneuten Montage des Anbauteils beeinträchtigt sein kann. Bei dem Anbauteil kann es sich außerdem um ein Verschleißteil handeln, insbesondere um ein Verschleißteil in einem Filtratablaufkanal. Dieses muss von Zeit zu Zeit ausgewechselt werden. Hierfür ist eine lösbare Verbindung des Anbauteils erforderlich.

Es ist z. B. bekannt, das Anbauteil mittels Schrauben anzuschrauben, die in ein Gewinde eingreifen. Beim Betrieb der Filterpresse herrschen Drücke von über 15 bar. Bei derart hohen Drücken können Feststoffe in das Gewinde hineingepresst werden. Dies kann, insbesondere bei rostfreiem Stahl, zur Folge haben, dass das Gewinde blockiert. Eine solche Blockierung stellt ein großes Problem dar, da das Anbauteil dann nicht mehr lösbar ist.

Der vorliegenden Erfindung liegt daher die Aufgabe zugrunde, eine Anordnung der eingangs genannten Art bereitzustellen, die eine verbesserte Befestigung des Anbauteils an der Filterplatten aufweist, durch welche eine dauerhafte Funktionalität der Anordnung im Betrieb gewährleistet ist.

Erfindungsgemäß wird diese Aufgabe durch eine Anordnung mit den Merkmalen des Anspruchs 1 und eine Anordnung mit den Merkmalen des Anspruchs 7 gelöst. Vorteilhafte Ausgestaltungen und Weiterbildungen ergeben sich aus den abhängigen Ansprüchen.

Bei der erfindungsgemäßen Anordnung ist das Anbauteil bei dem Kanal mittels zumindest einer lösbaren Kugeltyp-Schnappverbindung lösbar an der Filterplatte befestigt. Ferner umfasst die Kugeltyp-Schnappverbindung zumindest einen Kugelzapfen und zumindest eine Kupplung.

Unter einer Kugeltyp-Schnappverbindung wird in dieser Schrift die Verbindung zweier Elemente mittels elastischer Kräfte verstanden, wobei ein Element der Kugeltyp-Schnappverbindung kugelartig ausgebildet ist. Dies bedeutet, dass zumindest ein Querschnitt des kugelartigen Elements eine kreisähnliche, insbesondere kreisförmige Umfangslinie aufweist. Die kreisähnliche Umfangslinie erstreckt sich insbesondere zumindest über 50% der gesamten Umfangslinie des Elements. Die Umfangslinie muss dabei nicht exakt auf einer Kreisbahn verlaufen. Sie kann in bestimmten Bereichen zum Beispiel auch abgeflacht sein. In einer Einführrichtung des Elements für die Kugeltyp-Schnappverbindung vergrößert sich zunächst jedoch die Quererstreckung des Querschnitts, um sich nach dem Erreichen der maximalen Quererstreckung wieder zu verkleinern.

Durch diese Ausgestaltung der Kugeltyp-Schnappverbindung kann zum einen gewährleistet werden, dass das Anbauteil sicher und fest an der Filterplatte gehalten wird. Zum anderen kann die Verbindung jedoch auch leicht vom Nutzer gelöst werden, um das Anbauteil zu demontieren und anschließend erneut wieder an der Filterplatte zu befestigen.

Gegenüber einer herkömmlichen Befestigung des Anbauteils mittels Schrauben weist eine Schnappverbindung den Vorteil auf, dass beim Lösen der Befestigung des Anbauteils keine losen kleinteiligen Verbindungselemente wie beispielsweise Schrauben oder Muttern auftreten, die verlorengehen können. Im dauerhaften Betrieb einer Filterplatte hat sich nämlich herausgestellt, dass derartige lose Verbindungselemente, nachdem sie verlorengegangen sind, nicht ersetzt oder durch unzureichende Verbindungselemente ersetzt werden, wodurch im anschließenden Betrieb der Filterplatte in einer Filterpresse die Funktionalität der Filterplatte beeinträchtigt wird. Beim Lösen des Anbauteils, welches erfindungsgemäß mittels einer Schnappverbindung an der Filterplatte befestigt ist, treten keine solchen losen Verbindungselemente auf, die verlorengehen können. Gleichzeitig gewährleistet eine Schnappverbindung jedoch eine sichere und dauerhafte Befestigung des Anbauteils an der Filterplatte.

Außerdem ist bei der erfindungsgemäßen Befestigung des Anbauteils mittels der Schnappverbindung gewährleistet, dass das Anbauteil auch dann zuverlässig von der Filterplatte gelöst werden kann, wenn bei den hohen im Betrieb der Filterpresse auftretenden Drücken Feststoffe an der Schnappverbindung vorbei geleitet werden und gegebenenfalls in die Verbindung eindringen können.

Unter einer Schnappverbindung wird dabei die lösbare Verbindung zweier Elemente mittels elastischer Kräfte verstanden.

Gemäß einer weiteren Ausgestaltung der erfindungsgemäßen Anordnung weist das Anbauteil eine Öffnung auf, die in dem Kanal angeordnet. Das Anbauteil kann dabei eine Fluidverbindung von dem Kanal zu der Filterkammerbegrenzungsfläche, d. h. im Betrieb der Filterplatte zur Filterkammer, herstellen. Dabei kann allenfalls ein Filtertuch noch zwischen der Filterkammerbegrenzungsfläche und der Filterkammer angeordnet sein.

Gemäß einer Ausgestaltung der erfindungsgemäßen Anordnung ist das Anbauteil ein Verteilerring und der Kanal ein Einlaufkanal zum Zuführen der zu filternden Suspension in die Filterkammer, wobei mittels dem Verteilerring die zu filternde Suspension der Filterkammer zuführbar ist. Der Einlaufkanal wird auch als Trübebohrung bezeichnet.

Des Weiteren kann das Anbauteil ein Stützring und der Kanal ein Einlaufkanal zum Zuführen der zu filternden Suspension in die Filterkammer sein, wobei der Stützring benachbart zu einem Verteilerring angeordnet ist, durch den die zu filternde Suspension der Filterkammer zuführbar ist.

Ferner kann das Anbauteil als Stütznocken ausgebildet sein. Dieser steht in Querrichtung der Filterplatte hervor. Er dient zur Abstützung eines Bodens der Filterplatte an einem entsprechenden Stütznocken eines gegenüberliegenden Bodens einer benachbarten Filterplatte in einer Filterpresse. Durch den Stütznocken kann ein Durchbiegen des Bodens während des Filtervorgangs in der Filterpresse vermieden werden. Die Befestigung des Stützknochens über die Kugeltyp-Schnappverbindung hat den Vorteil, dass die Beweglichkeit der Verbindung des Stütznockens mit der Filterplatte erhöht ist und die Krafteinleitung bei geschlossener Filterpresse verbessert werden kann. Der Stütznocken kann bei dem Kanal an der Filterplatte befestigt sein. Er kann insbesondere um den Kanal herum angeordnet sein. Alternativ kann der Stütznocken jedoch auch in Ergänzung eines anderen Anbauteils an der Filterplatte befestigt sein, wobei das andere Anbauteil bei dem Kanal der Filterplatte befestigt ist.

Des Weiteren kann das Anbauteil eine Membran sein. Diese kann insbesondere an den Ecken über die vorstehend beschriebenen lösbaren Kugeltyp-Schnappverbindungen mit der Filterplatte verbunden sein. Hierdurch kann vorteilhafterweise eine Vorfixierung der Membran erreicht werden.

Bei diesen Ausgestaltungen der Anordnung lässt sich somit der Verteilerring,. der Stützring, der Stütznocken oder die Membran sehr einfach von der Filterplatte lösen, um beispielsweise das Filtertuch auszuwechseln. Dabei besteht nicht die Gefahr, dass lose Verbindungselemente verlorengehen und der Verteilerring, der Stützring, der Stütznocken oder die Membran anschließend unzureichend wieder an der Filterplatte befestigt werden.

Durch den Stützring wird der Verteilerring abgestützt, so dass seine Stabilität erhöht wird. Ferner kann bei einer Membranfilterplatte durch den Stützring die Membran abgestützt und ggf. das Filtertuch geschont werden.

Des Weiteren kann das Anbauteil ein weiterer Verteilerring sein. Beispielsweise kann eine Kammerfilterplatte zwei Verteilerringe aufweisen.

Gemäß einer weiteren Ausgestaltung der erfindungsgemäßen Anordnung weist die Filterplatte um eine den Kanal bildende Öffnung eine erste Anlagefläche und das Anbauteil um seine Öffnung eine zweite Anlagefläche auf. Die Kugeltyp-Schnappverbindung ist in diesem Fall insbesondere im Bereich der Anlageflächen gebildet, so dass bei einer Verbindung des Anbauteils mit der Filterplatte die Anlageflächen aneinander anliegend gehalten werden. Durch die aneinander anliegenden Anlageflächen wird die Dichtwirkung für die Verbindung zwischen dem Anbauteil und der Filterplatte verbessert.

Dabei kann die erfindungsgemäße Kugeltyp-Schnappverbindung ferner vorteilhafterweise Abstandsunterschiede, welche sich zwischen dem Anbauteil und der Filterplatte ergeben können, ausgleichen, da bei der Verbindung elastische Kräfte wirken. Ist beispielsweise ein Filtertuch zwischen einem Verteilerring und der Filterplatte eingeklemmt, können bei der elastischen Kugeltyp-Schnappverbindung Dickenveränderungen der eingeklemmten Tücher ausgeglichen werden. Auf diese Weise können beim Schließen der Filterpresse die Tücher flüssigkeitsdicht zwischen Verteilerring und einer Plattenbohrung eingepresst werden. Im Gegensatz hierzu ist bei einer Schraubverbindung bei einem eingeklemmten Filtertuch der Abstand zwischen dem Stützring bzw. Verteilerring und der Filterplatte festgelegt. Wenn sich die Dicke des Filtertuchs verändert, wirken keine elastischen Kräfte, welche weiterhin den Verteilerring bzw. Stützring gegen die Filterplatte pressen, so dass die Verbindung dann möglicherweise nicht mehr flüssigkeitsdicht ist.

Um diese Dichtwirkung weiter zu verbessern, kann zwischen der Filterplatte und dem Anbauteil bei den Anlageflächen eine Ringdichtung angeordnet sein. Diese umschließt die Öffnung des Anbauteils bzw. den Einlaufkanal. Beispielsweise kann zumindest eine der Anlageflächen eine Nut zur Aufnahme einer dichtenden Rundschnur aufweisen.

Des Weiteren kann das Anbauteil ein Abrasionsschutz sein. Der Kanal kann in diesem Fall z. B. ein Ablaufkanal zum Abführen des Filtrats aus der Filterkammer sein. Der Abrasionsschutz ist dann in oder bei dem Ablaufkanal, insbesondere unterhalb eines Filtertuchs bzw. in Abflussrichtung hinter dem Filtertuch, oder bei einer Auslauföffnung des Ablaufkanals angeordnet. Ein solcher Abrasionsschutz dient dazu, die Auslauföffnung oder die Wände des Ablaufkanals zu schützen, wenn zur weiteren Trocknung eines Filterkuchens Druckluft entgegen der Austrittsrichtung des Filtrats durch die Filterplatte geblasen wird und dabei Feststoffpartikel mitgerissen werden. Dabei können Abrasionsteilchen die Wände der Auslauföffnung oder des Ablaufkanals beschädigen. Der Abrasionsschutz ist daher ein Verschleißteil, welches häufig ausgewechselt werden muss.

Gemäß einer anderen Ausgestaltung der erfindungsgemäßen Filterplatte besteht die Kupplung insbesondere aus einem Elastomer. Sie ist somit elastisch. Der Kugelzapfen ist in diesem Fall insbesondere nicht elastisch, so dass die Kupplung den Kugelzapfen elastisch hält. Gemäß einer anderen Ausgestaltung ist umgekehrt der Kugelzapfen elastisch und die Kupplung nicht elastisch.

Der Kugelzapfen besteht beispielsweise aus Metall oder einem Kunststoff, insbesondere einem relativ zur Kupplung starren Kunststoff. Der Kugelzapfen kann einen Bolzen aufweisen, an den sich ein kugelartiges Abschlusselement anschließt. Die Kupplung kann in diesem Fall eine Kugelpfanne zur Aufnahme des kugelartigen Abschlusselements aufweisen.

Die Kupplung weist insbesondere eine Eintrittsöffnung für das kugelartige Abschlusselement des Kugelzapfens auf. Die maximale Quererstreckung des kugelartigen Abschlusselements ist in diesem Fall größer als die maximale Quererstreckung der Eintrittsöffnung der Kupplung. Beim Einführen des kugelartigen Abschlusselements in die Kupplung über die Eintrittsöffnung wird somit die Eintrittsöffnung elastisch geweitet. Wenn das kugelartige Abschlusselement in der Kupplung sitzt, wird dieses somit elastisch bei der Eintrittsöffnung der Kupplung gehalten.

Gemäß einer Ausgestaltung der erfindungsgemäßen Anordnung ist der Kugelzapfen an der Filterplatte und die Kupplung an dem Anbauteil angeordnet. Gemäß einer anderen Ausgestaltung ist umgekehrt die Kupplung an der Filterplatte und der Kugelzapfen an dem Anbauteil angeordnet.

Wenn das Anbauteil in dem Einlaufkanal oder um eine Öffnung des Einlaufkanals herum angeordnet ist, kann es gemäß einer Ausgestaltung der erfindungsgemäßen Anordnung mittels mehrerer Kugeltyp-Schnappverbindungen an der Filterplatte befestigt sein, wobei die Kugeltyp-Schnappverbindungen um eine Öffnung des Anbauteils und den Kanal bildende Öffnung herum angeordnet sind, insbesondere sind die Kugeltyp-Schnappverbindungen konzentrisch um die Öffnung des Anbauteils angeordnet. In diesem Fall sind die Kugeltyp-Schnappverbindungen insbesondere Kugelzapfen und korrespondierende Kupplungen, die um die Öffnung des Anbauteils herum angeordnet sind. Hierdurch wird bevorzugt sichergestellt, dass die durch die Kugeltyp-Schnappverbindungen hergestellte Befestigung des Anbauteils an der Filterplatte fluiddicht ist.

Ein weiterer Aspekt der Erfindung betrifft eine Anordnung einer Filterplatte für eine Filterpresse und mindestens eines Anbauteils, wobei die Filterplatte eine Filterkammerbegrenzungsfläche aufweist, mit welcher eine in der Filterpresse zu bildende Filterkammer begrenzbar ist, in der Filterplatte zumindest ein Kanal für eine Fluidverbindung zu der Filterkammerbegrenzungsfläche ausgebildet ist und das Anbauteil bei dem Kanal an der Filterplatte befestigt ist. Dabei ist das Anbauteil mittels zumindest einer Schnappverbindung lösbar an der Filterplatte befestigt und es weist eine Öffnung auf, die in dem Kanal angeordnet ist. Erfindungsgemäß ist das Anbauteil mittels zumindest einer lösbaren Kugeltyp-Schnappverbindung an der Filterplatte befestigt ist, wobei die Kugeltyp-Schnappverbindung einen ringförmigen zapfenartigen Vorsprung und eine dem Vorsprung zugeordnete Ringnut umfasst, wobei der ringförmige zapfenartige Vorsprung an dem Anbauteil und die Ringnut an der Filterplatte angeordnet ist oder der ringförmige zapfenartige Vorsprung an der Filterplatte und die Ringnut an dem Anbauteil angeordnet ist, wobei der ringförmige zapfenartige Vorsprung in einem senkrecht zur seiner Umfangsrichtung gebildeten Querschnitt einen Ringbolzen aufweist, an den sich ein kugelartiges ringförmiges Abschlusselement anschließt, das in einer Weise kugelartig ausgebildet ist, dass es bei zumindest einem Querschnitt eine kreisähnliche Umfangslinie aufweist, und wobei die Kugeltyp-Schnappverbindung ferner einen ringförmigen Adapterring umfasst, der korrespondierend zur Ringnut ausgebildet ist.

Die Verwendung der lösbaren Kugeltyp-Schnappverbindung weist die vorstehend beschriebenen Vorteile auf.

Durch eine Kugeltyp-Schnappverbindung über einen ringförmigen Vorsprung, welcher in die Ringnut eingreifen kann und mit dieser die Kugeltyp-Schnappverbindung eingeht, kann eine besonders sichere Verbindung zwischen dem Anbauteil und der Filterplatte hergestellt werden, wobei die Haltekräfte ringförmig ausgeübt werden. Hierdurch kann insbesondere sichergestellt werden, dass die durch die Kugeltyp-Schnappverbindungen hergestellte Befestigung des Anbauteils an der Filterplatte fluiddicht ist.

Unter einem ringförmigen Vorsprung bzw. einer Ringnut wird in dieser Schrift verstanden, dass der Vorsprung bzw. die Nut in bestimmter Weise auf einer gebogenen Linie liegen. Es muss sich dabei kein geschlossener Ring ergeben, obwohl eine geschlossene ringförmige Struktur bevorzugt ist. Die Ringform kann in verschiedenen Geometrien ausgebildet sein, sie ist jedoch insbesondere kreisringförmig.

Der ringförmige zapfenartige Vorsprung weist erfindungsgemäß in einem senkrecht zu seiner Umfangsrichtung gebildeten Querschnitt einen Ringbolzen auf, an den sich ein kugelartiges ringförmiges Abschlusselement anschließt. Da der im Querschnitt gebildete Ringbolzen des Vorsprungs sich ringförmig erstreckt, kann dieser Teil des Vorsprungs auch als ringförmiger Steg bezeichnet werden. Das kugelartige ringförmige Abschlusselement hat die Form eines in Ringform gebogenen Zylinders, wobei der Querschnitt des Zylinders scheibenartig ist, wie es vorstehend definiert wurde.

Gemäß einer Ausgestaltung der erfindungsgemäßen Anordnung gemäß dem zweiten Aspekt weist die Ringnut eine ringförmige erste Eintrittsöffnung zu einem ringförmigen ersten Nuthohlkörper auf, wobei die maximale Quererstreckung der ersten Eintrittsöffnung in einem senkrecht zur Umfangsrichtung der Ringnut gebildeten Querschnitt kleiner als die maximale Quererstreckung des erste Nuthohlkörpers bei diesem Querschnitt ist. Die Ringnut weist somit bei der Eintrittsöffnung eine Verengung auf. Nach innen erweitert sie sich dann zu dem ersten Nuthohlkörper. Beispielsweise kann die Ringnut schwalbenschwanzförmig ausgebildet sein. Auf diese Weise kann in der Ringnut ein Element gehalten werden.

Gemäß einer weiteren Ausgestaltung der erfindungsgemäßen Anordnung gemäß dem zweiten Aspekt umfasst die Kugeltyp-Schnappverbindung einen ringförmigen Adapterring, der korrespondierend zur Ringnut ausgebildet ist. Über diesen Adapterring kann die Schnappverbindung zwischen dem Anbauteil und der Filterplatte hergestellt werden.

Der Adapterring besteht insbesondere aus einem Elastomer. Beispielsweise ist der Adapterring ein Gummiring, wobei der Gummiring sowohl aus Naturkautschuken als auch aus Synthesekautschuken sowie aus thermoplastischen Elastomeren hergestellt sein kann. Auf diese Weise kann durch den Adapterring unabhängig vom Material des Anbauteils und der Filterplatte eine Schnappverbindung zwischen diesen beiden Teilen hergestellt werden, und zwar insbesondere auch dann, wenn das Anbauteil und die Filterplatte formstabil sind, beispielsweise aus einem formstabilen Kunststoff bestehen.

Der Adapterring weist insbesondere in einem senkrecht zu seiner Umfangsrichtung gebildeten Querschnitt eine äußere Fläche auf, die zur Innenfläche der Ringnut korrespondiert, so dass der Adapterring in die Ringnut einsetzbar ist und in dieser formschlüssig gehalten werden. Die äußere Fläche des Adapterrings ist somit insbesondere auch schwalbenschwanzförmig.

Ferner ist in dem Adapterring eine weitere Ringnut gebildet, die eine ringförmige zweite Eintrittsöffnung zu einem ringförmigen zweiten Nuthohlkörper aufweist, wobei die maximale Quererstreckung der zweiten Eintrittsöffnung in einem senkrecht zur Umfangsrichtung des Adapterrings gebildeten Querschnitt kleiner als die maximale Quererstreckung des zweiten Nuthohlkörpers bei diesem Querschnitt ist. In die weitere Ringnut kann das über die Kugeltyp-Schnappverbindung zu haltende Teil eingesetzt werden kann. Hierfür ist insbesondere die maximale Quererstreckung des kugelartigen ringförmigen Abschlusselements des zapfenartigen Vorsprungs größer als die maximale Quererstreckung der zweiten Eintrittsöffnung des Adapterrings. Die kreisartige Querschnittsform des kugelartigen ringförmigen Abschlusselements korrespondiert zu der Querschnittsform des zweiten Nuthohlkörpers. Das kugelartige ringförmige Abschlusselement des Vorsprungs kann somit in der weiteren Ringnut des Adapterrings gehalten werden.

Der Adapterring weist insbesondere eine den zweiten Nuthohlkörper bildende Innenfläche auf, die zur Oberfläche des ringförmigen zapfenartigen Vorsprungs korrespondiert, so dass der ringförmige zapfenartige Vorsprung in den zweiten Nuthohlkörper einsetzbar ist. Es hat sich herausgestellt, dass die Kombination der schwalbenschwanzförmigen Querschnittsform der Nut zur Aufnahme des Adapterrings und der in dem Adapterrings ausgebildeten weiteren Nut mit einer kreisartigen Querschnittsform zu einer besonders sicheren und gut zu handhabenden Verbindung zwischen dem Anbauteil und der Filterplatte führt.

Gemäß einer Ausgestaltung der erfindungsgemäßen Anordnung gemäß dem zweiten Aspekt der Erfindung ist das Anbauteil ein Verteilerring, ein Stützring, ein Stütznocken, ein Abrasionsschutz und/oder eine Membran wie es vorstehend bereits im Detail erläutert wurde.

Die Erfindung wird nun anhand von Ausführungsbeispielen mit Bezug zu den Zeichnungen erläutert.
- Figur 1: zeigt schematisch den allgemeinen Aufbau eines Randbereichs eines Filterplattenpaars für eine Filterpresse, wobei der Einlaufkanal für die Trübe außerhalb des Dichtrands angeordnet ist,
- Figur 2: zeigt ein erstes Ausführungsbeispiel der erfindungsgemäßen Anordnung, bei der der Einlaufkanal für die Trübe in der Mitte der Filterplatte angeordnet ist,
- Figur 3: zeigt die Detailansicht D der Darstellung der Figur 2,
- Figur 4: zeigt eine Aufsicht auf die Anordnung der Figur 2, wobei der Verteilerring an der Filterplatte befestigt ist,
- Figur 5: zeigt den Schnitt B-B der Darstellung der Figur 4,
- Figur 6: zeigt die Detailansicht C der Schnittansicht der Figur 5,
- Figur 7: zeigt ein zweites Ausführungsbeispiel der erfindungsgemäßen Anordnung,
- Figur 8: zeigt den Verteilerring des in Figur 7 gezeigten zweiten Ausführungsbeispiels der Anordnung,
- Figur 9: zeigt einen Adapterring des in Figur 7 gezeigten zweiten Ausführungsbeispiels der erfindungsgemäßen Anordnung,
- Figur 10: zeigt schematisch den Querschnitt des in Figur 9 gezeigten Adapterrings der erfindungsgemäßen Anordnung,
- Figur 11: zeigt eine Schnittansicht des zweiten Ausführungsbeispiels der erfindungsgemäßen Anordnung, bei welcher zwei Verteilerringe auf beiden Seiten der Filterplatte mit dieser verbunden sind,
- Figur 12: zeigt eine Detailansicht der Schnittansicht der Figur 11,
- Figur 13: zeigt drittes Ausführungsbeispiel der erfindungsgemäßen Anordnung,
- Figur 14: zeigt die Detailansicht E des drittes Ausführungsbeispiels der Figur 13 und
- Figur 15: zeigt einen Abrasionsschutz des in Figur 13 gezeigten dritten Ausführungsbeispiels der erfindungsgemäßen Anordnung.

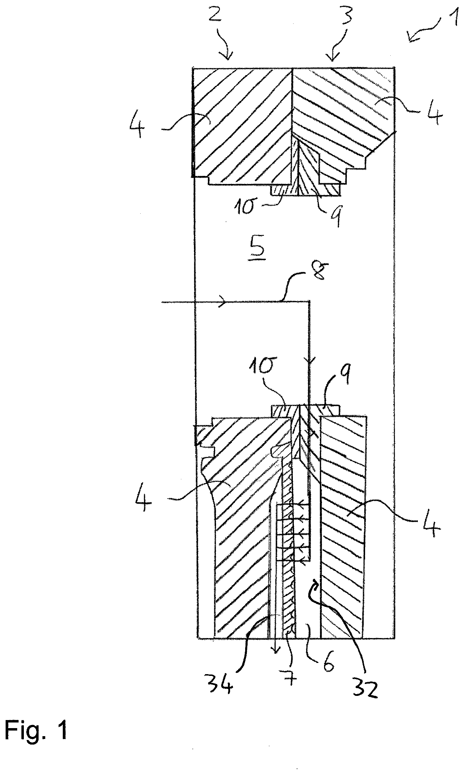

Mit Bezug zu Figur 1 wird zunächst der allgemeine Aufbau eines Filterplattenpakets 1 bei einer Anordnung in einer Filterpresse beschrieben:
Das Filterplattenpaket 1 umfasst eine Membranfilterplatte 2 und eine Kammerfilterplatte 3. Das Filterplattenpaket 1 kann jedoch auch durch andere Kombinationen von Filterplatten gebildet sein, z. B. aus mehreren Kammerfilterplatten 3. Die Filterplatten 2 und 3 umfassen einen Grundkörper 4. Bei der Kammerfilterplatte 3 kann der Grundkörper 4 auch die Filterplatte selbst sein. Bei dem in Figur 1 gezeigten Beispiel ist im Randbereich des Grundkörpers 4 ein Einlaufkanal 5 für die zu filternde Suspension, die auch als Trübe bezeichnet wird, gebildet. Dieser Einlaufkanal 5 kann auch zentral in der Mitte der Filterplatten 2 und 3 gebildet sein, wie es später erläutert wird. Zwischen der Membranfilterplatte 2 und der Kammerfilterplatte 3 ist eine Filterkammer 6 gebildet, die auf einer Seite von einer Filterkammerbegrenzungsfläche 32 begrenzt ist. In der Filterkammer 6 ist ein Filtertuch 7 mittels eines randseitigen Befestigungselements in einer Nut der Membranfilterplatte 2 befestigt. Des Weiteren ist bei der Kammerfilterplatte 3 benachbart zu der Filterkammerbegrenzungsfläche 32 ein (nicht gezeigtes) Filtertuch angeordnet.

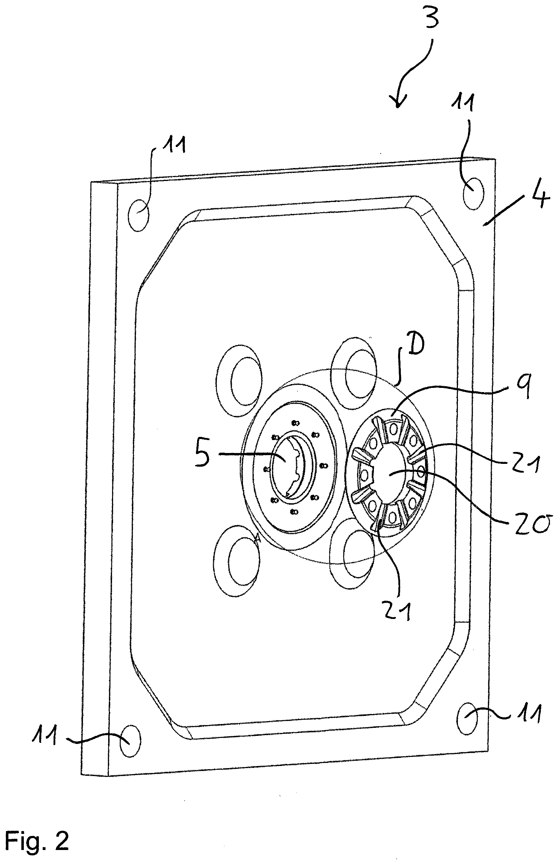

In die Kammerfilterplatte 3 ist ein Verteilerring 9 eingesetzt. Der Verteilerring 9 weist mehrere Verteilungskanäle 21 auf, die eine Fluidverbindung von dem Einlaufkanal 5 in die Filterkammer 6 bereitstellen, wie es in Figur 2 gezeigt ist. Benachbart zu dem Verteilerring 9 ist ein Stützring 10 angeordnet, so dass der Verteilerring 9 und der Stützring 10 zwischen der Membranfilterplatte 2 und der Kammerfilterplatte 3 dichtend eingeklemmt sind. Auf diese Weise wird die Filterkammer 6 von dem Verteilerring 9 und dem Stützring 10 so abgeschlossen, dass auf der Zulaufseite zum Einlaufkanal 5 nur eine Fluidverbindung über die Verteilungskanäle 21 des Verteilerrings 9 besteht.

In Figur 1 ist auch der Filtrierweg 8 dargestellt. Die Suspension wird dem Einlaufkanal 5 zugeführt. Von dort gelangt die Suspension über die Verteilungskanäle 21 des Verteilerrings 9 in die Filterkammer 6. Der flüssige Anteil der Suspension tritt durch das Filtertuch 7 hindurch und wird über Sammelkanäle einer (nicht gezeigten) Membran abgeführt. Die Sammelkanäle stehen über Ablaufkanäle 34 für das Filtrat in Verbindung mit Filtratbohrungen 11 (siehe Figur 2), über welche das Filtrat abgeführt wird.

Der Einlaufkanal 5 kann nicht nur im Bereich des Dichtrands in den Filterplatten 2 und 3 gebildet sein. Es ist auch möglich, dass der Einlaufkanal zentral in der Mitte der Filterplatten 2 und 3 gebildet ist. Der allgemeine Aufbau eines solchen Filterplattenpakets ist an sich bekannt und beispielsweise in der WO 2009/012884 A1 beschrieben.

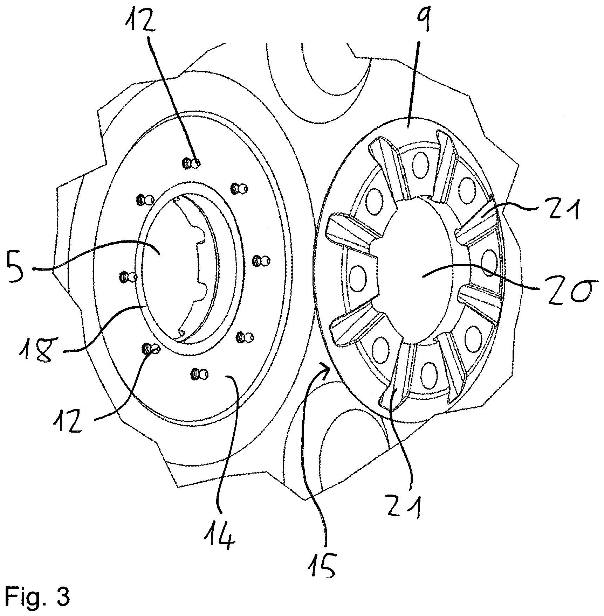

Bei herkömmlichen Filterplatten, wie sie beispielsweise in der WO 2009/012884 A1 oder der WO 2006/111378 A1 beschrieben sind, sind Anbauteile wie der Verteilerring 9 oder der Stützring 10 mittels eingesteckten Verbindungselementen oder Schrauben befestigt. Bei der erfindungsgemäßen Filterplatte erfolgt die Verbindung eines Anbauteils, wie beispielsweise des Verteilerrings 9, auf andere Weise, wie es mit Bezug zu den Figuren 2 bis 6 im Folgenden anhand eines ersten Ausführungsbeispiels erläutert wird:
In dem in Figur 2 gezeigten Beispiel umfasst die Kammerfilterplatte 3 einen zentralen Einlaufkanal 5. Der Einlaufkanal 5 könnte auf gleiche Weise jedoch auch wie mit Bezug zu Figur 1 beschrieben am Rand angeordnet sein. In den Ecken sind in Figur 2 die Filtratbohrungen 11 angeordnet.

Als Anbauteil wird der Verteilerring 9 an dem Grundkörper 4 der Kammerfilterplatte 3 bzw. an der Kammerfilterplatte 3 selbst befestigt. Hierfür ist bei dem Grundkörper 4 um den Einlaufkanal 5 herum eine erste Anlagefläche 14 gebildet. Auf dieser ersten Anlagefläche 14 sind Kugelzapfen 12 konzentrisch um den Einlaufkanal 5 herum angeordnet, welche aus der ersten Anlagefläche 14 hervorstehen.

Bei dem Verteilerring 9 ist eine zu der ersten Anlagefläche 14 korrespondierende zweite Anlagefläche 15 gebildet, bei welcher Kupplungen 13 angeordnet sind, die zu den Kugelzapfen 12 des Grundkörpers 4 korrespondieren. Die Kupplungen 13 sind in den Verteilerring 9 integriert. Zwar bestehen die Kupplungen 13 und der Verteilerring 9 aus verschiedenen Materialien; sie sind jedoch einteilig ausgebildet. Um den Verteilerring 9 an dem Grundkörper 4 zu befestigen, wird der Verteilerring 9 mit den Kupplungen 13 so auf die Kugelzapfen 12 aufgesteckt, dass der Verteilerring 9 mittels lösbarer Kugeltyp-Schnappverbindungen an dem Grundkörper 4 befestigt ist. Die Kugeltyp-Schnappverbindungen zwischen den Kugelzapfen 12 und den Kupplungen 13 sind dabei so ausgebildet, dass die erste und zweite Anlagefläche 14, 15 aneinandergepresst werden.

Bei der ersten Anlagefläche 14 ist um den Einlaufkanal 5 herum eine Ringdichtung 18 angeordnet, so dass bei einer Befestigung des Verteilerrings 9 an dem Grundkörper 4 eine dichtende Verbindung mit dem Verteilerring 9 hergestellt wird. Die Ringdichtung 18 kann dabei von einer Nut und einer Rundschnur in der ersten Anlagefläche 14 gebildet sein.

Der Verteilerring 9 weist eine Öffnung 20 auf, welche sich an den Einlaufkanal 5 anschließt, wenn der Verteilerring 9 an der Grundplatte 4 befestigt ist. Von dieser Öffnung 20 kann Suspension in die Verteilungskanäle 21 des Verteilerrings 9 gelangen und von dort der Filterkammer 6 zugeführt werden.

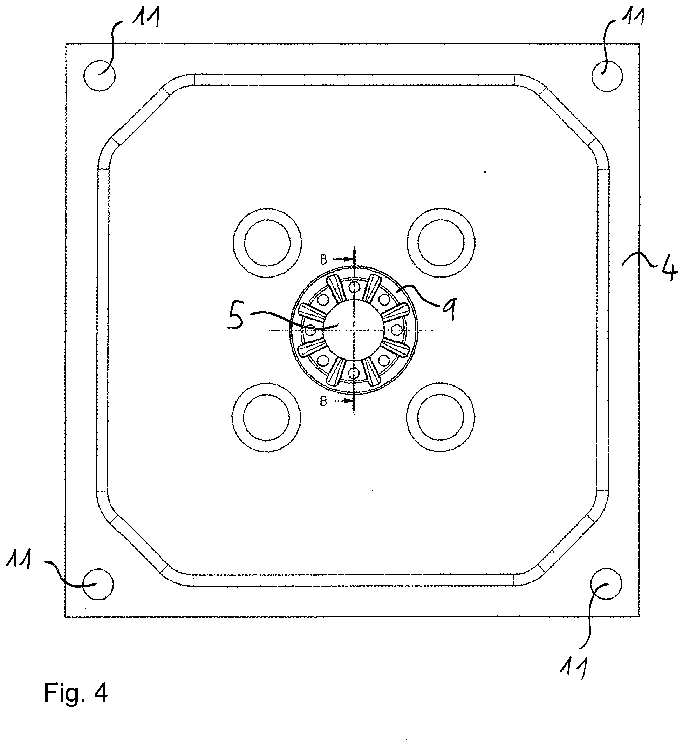

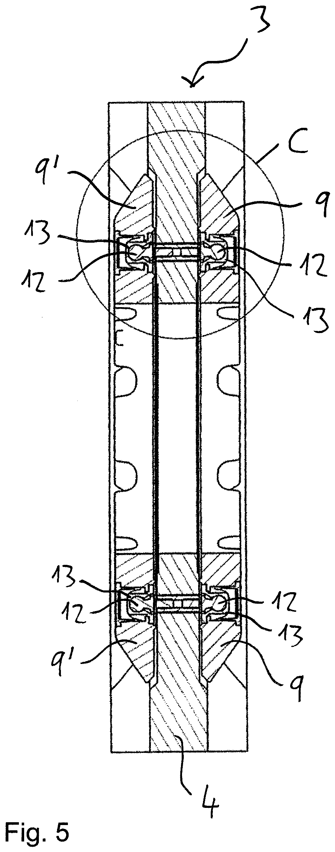

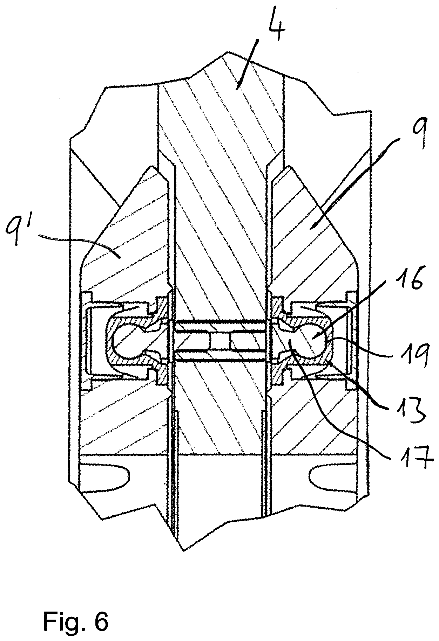

In Figur 4 und den Schnittansichten der Figuren 5 und 6 ist die Befestigung des Verteilerrings 9 im Detail gezeigt. Dabei ist auf jeder Seite des Grundkörpers 4 der Kammerfilterplatte 3 ein Verteilerring 9, 9` befestigt. Wie insbesondere aus Figur 6 ersichtlich, umfasst der Kugelzapfen 12 einen Bolzen 17 und ein kugelartiges Abschlusselement 16. Der von dem Bolzen 17 und dem kugelartigen Abschlusselement 16 gebildete Kugelzapfen 12 besteht aus einem starren Material, wie beispielsweise aus einem Metall oder einem Kunststoff. Im befestigten Zustand des Verteilerrings 9 befindet sich das kugelartige Abschlusselement 16 in der Kupplung 13, welche eine Kugelpfanne 19 bildet. Damit das kugelartige Abschlusselement 16 in die Kupplung 13 eingeführt werden kann, ist die Kupplung 13 elastisch ausgebildet. Sie besteht beispielsweise aus einem Elastomer.

Die maximale Quererstreckung, das heißt im vorliegenden Fall der Durchmesser des kugelartigen Abschlusselements 16, ist größer als die maximale Quererstreckung der Eintrittsöffnung der Kupplung 13. Beim Einführen des kugelartigen Abschlusselements 16 in die Kupplung 13 wird somit die Eintrittsöffnung der Kupplung 13 vergrößert. Wenn das kugelartige Abschlusselement 16 an der Kugelpfanne 19 der Kupplung 13 anliegt, verkleinert sich die Eintrittsöffnung der Kupplung 13 aufgrund der elastischen Eigenschaften der Kupplung 13 wieder, so dass ein Vorsprung der Kupplung 13 in den Übergangsbereich zwischen dem Bolzen 17 und dem kugelartigen Abschlusselement 16 eingreift und das kugelartige Abschlusselement 16 in der Kupplung 13 hält. Auf diese Weise wird eine lösbare Kugeltyp-Schnappverbindung zwischen dem Verteilerring 9 und dem Grundkörper 4 hergestellt.

Bei der Kammerfilterplatte 3 wird somit der Verteilerring 9 als Anbauteil mittels mehrerer lösbarer Kugeltyp-Schnappverbindungen, für die die Kugelzapfen 12 und die Kupplung 13 vorgesehen sind, an dem Grundkörper 4 der Kammerfilterplatte 3 befestigt.

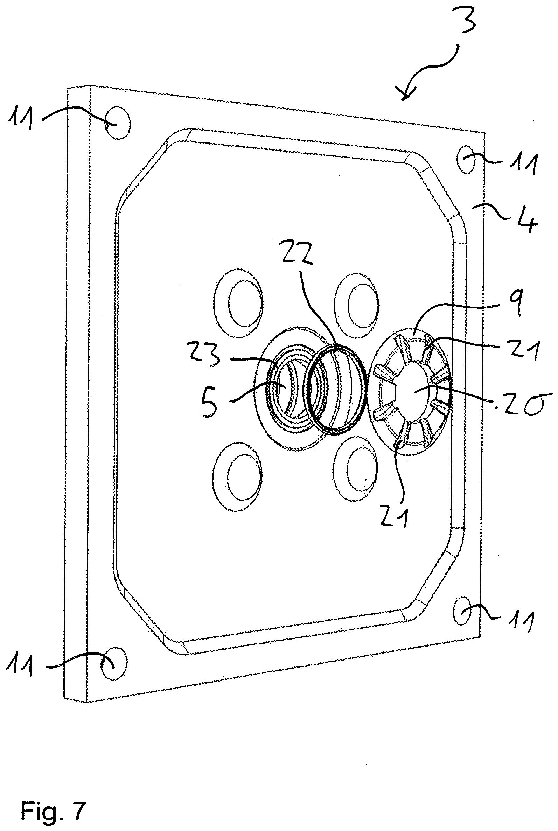

Mit Bezug zu den Figuren 7 bis 12 wird ein zweites Ausführungsbeispiel der erfindungsgemä-ßen Anordnung beschrieben.

Teile dieses zweiten Ausführungsbeispiels, die identisch zu entsprechenden Teilen des ersten Ausführungsbeispiels sind, werden mit gleichen Bezugszeichen bezeichnet. Hinsichtlich der detaillierten Beschreibung dieser Teile wird auf die Beschreibung des ersten Ausführungsbeispiels verwiesen.

Wie beim ersten Ausführungsbeispiel umfasst die in Figur 7 gezeigte Kammerfilterplatte 3 des zweiten Ausführungsbeispiels einen zentralen Einlaufkanal 5. Als Anbauteil wird ein Verteilerring 9 an der Kammerfilterplatte 3 befestigt. Die Verbindung erfolgt wie beim ersten Ausführungsbeispiel über eine lösbare Kugeltyp-Schnappverbindung, welche jedoch anders ausgestaltet ist als im ersten Ausführungsbeispiel, wie es im Folgenden beschrieben wird:
In dem Grundkörper 4 ist eine Ringnut 23 gebildet, welche konzentrisch um den Einlaufkanal 5 verläuft. Da der Einlaufkanal 5 im Querschnitt senkrecht zur Normalen der Kammerfilterplatte 3 kreisförmig ist, ist auch die Ringnut 23 in dieser Querschnittsebene kreisringförmig. Bei anderen Ausführungsbeispielen kann die Ringnut 23 jedoch auch eine andere Form haben.

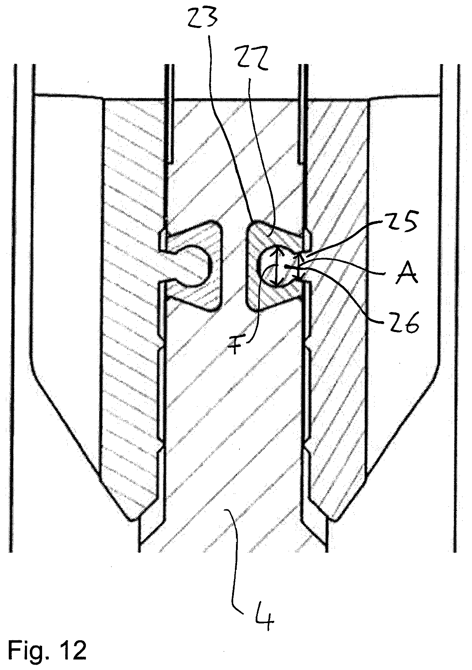

Wie insbesondere aus Figur 12 ersichtlich, weist die Ringnut 23 eine ringförmige erste Eintrittsöffnung auf, die zu einem ringförmigen ersten Nuthohlkörper führt. In einem Querschnitt in Umfangsrichtung der Ringnut 23, wie er in Figur 12 gezeigt ist, ist die Ringnut 23 schwalbenschwanzförmig ausgebildet. Dabei ist die maximale Quererstreckung der ersten Eintrittsöffnung in einem senkrecht zur Umfangsrichtung der Ringnut 23 gebildeten Querschnitt kleiner als die maximale Quererstreckung des ersten Nuthohlkörpers bei diesem Querschnitt.

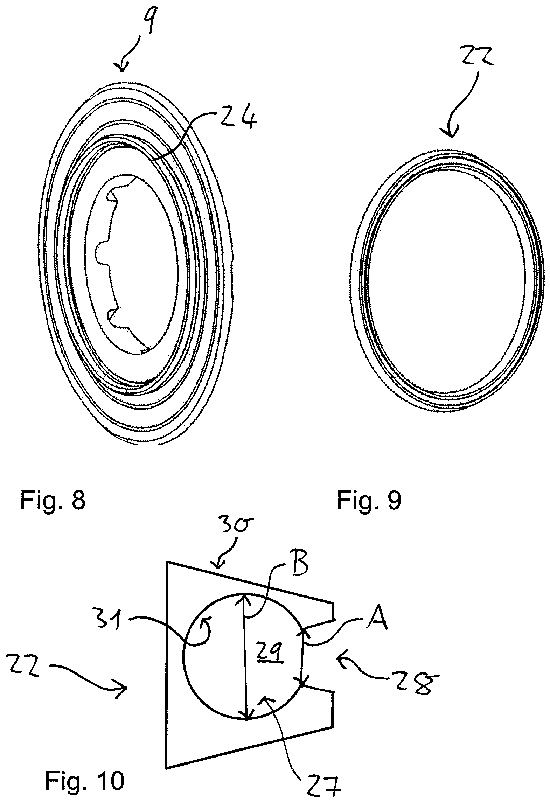

Wie in Figur 8 gezeigt, weist der Verteilerring 9 auf der der Kammerfilterplatte 3 zugewandten Seite einen ringförmigen zapfenartigen Vorsprung 24 auf. Des Weiteren weist die Kugeltyp-Schnappverbindung des zweiten Ausführungsbeispiels einen Adapterring 22 auf, der aus einem Elastomer, insbesondere aus Gummi, besteht. Dieser Adapterring 22 ist in den Figuren 9 und 10 gezeigt.

Figur 10 zeigt dabei einen Querschnitt des Adapterrings 22, der senkrecht zu seiner Umfangsrichtung gebildet ist. Die äußere Fläche 30 des Adapterrings 22 ist trapezförmig oder schwalbenschwanzförmig. Diese äußere Fläche 30 korrespondiert zu der Innenfläche der Ringnut 23. Auf diese Weise kann der Adapterring 22 in die Ringnut 23 so eingesetzt werden, dass er formschlüssig in der Ringnut 23 sitzt. Ferner ist in dem Adapterring 22 eine weitere Ringnut 27 gebildet. Diese weitere Ringnut 27 weist jedoch eine andere Form auf als die Ringnut 23 des Grundkörpers 4 der Kammerfilterplatte 3. Sie weist eine ringförmige zweite Eintrittsöffnung 28 auf. An die zweite Eintrittsöffnung 28 schließt sich ein ringförmiger zweiter Nuthohlkörper 29 an. Die maximale Quererstreckung A der zweiten Eintrittsöffnung 28 in dem in Figur 10 gezeigten Querschnitt ist kleiner als die maximale Quererstreckung F des zweiten Nuthohlkörpers 29 bei diesem Querschnitt.

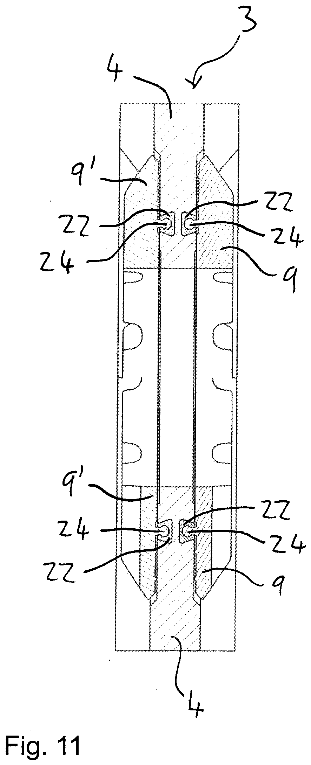

Wie insbesondere in den Figuren 11 und 12 gezeigt weist der ringförmige zapfenartige Vorsprung 24 des Verteilerrings 9 in einem senkrecht zu seiner Umfangsrichtung gebildeten Querschnitt einen Ringbolzen 25 auf, an den sich ein kugelartiges ringförmiges Abschlusselement 26 anschließt. Die Geometrie des ringförmigen zapfenartigen Vorsprungs 24 korrespondiert somit mit der weiteren Ringnut 27 des Adapterrings 22. Wie in den Figuren 11 und 12 gezeigt, kann somit der Adapterring 22 in die Ringnut 23 eingesetzt werden. Ferner kann der ringförmige zapfenartige Vorsprung 24 des Verteilerrings 9 in die weitere Ringnut 27 des Adapterrings 22 eingesetzt werden, so dass eine lösbare Kugeltyp-Schnappverbindung zwischen dem Verteilerring 9 und dem Grundkörper 4 der Kammerfilterplatte 3 gebildet wird.

In Figur 11 ist ähnlich wie in Figur 5 die Verbindung zweier Verteilerringe 9 und 9' mit dem Grundkörper 4 einer Kammerfilterplatte 3 über die Kugeltyp-Schnappverbindung des zweiten Ausführungsbeispiels gezeigt, wobei in Figur 12 eine Detailansicht dieser Kugeltyp-Schnappverbindung dargestellt ist.

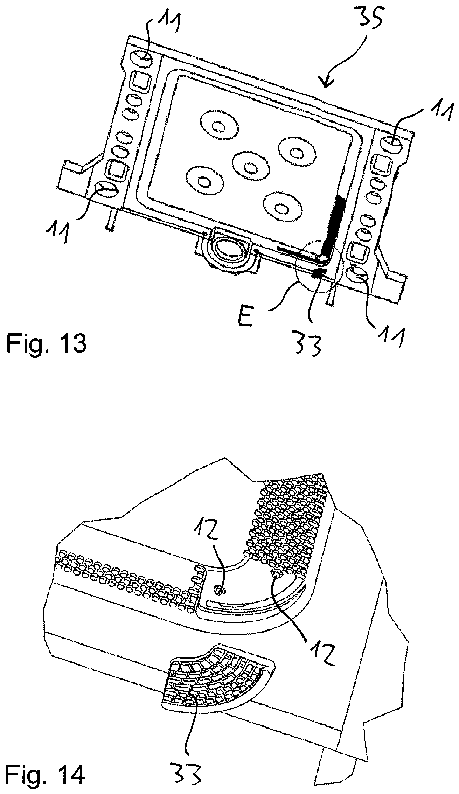

Mit Bezug zu den Figuren 13 bis 15 wird ein drittes Ausführungsbeispiel der erfindungsgemä-ßen Anordnung beschrieben.

Bei einer Filterplatte 35 ist im Auslauf für das Filtrat ein Abrasionsschutz 33 angeordnet. Dieser Abrasionsschutz 33 dient dazu, die Auslauföffnung oder die Wände des Ablaufkanals zu schützen, wenn zur weiteren Trocknung eines Filterkuchens Druckluft entgegen der Austrittsrichtung des Filtrats durch den Ablaufkanal geblasen wird.

Der Abrasionsschutz 33 ist als Einsatz in der Filterfläche ausgebildet. Wie in Figur 14 gezeigt weist er daher auf der Oberseite Noppen zum Abstützen eines Filtertuchs auf. Die davon abgewandte Unterseite des Abrasionsschutzes 33 ist einem Ablaufkanal für das Filtrat zugewandt. Wie in Figur 13 gezeigt, weist die Filterplatten 35 in den Ecken Filtratbohrungen 11 auf. Von diesen Filtratbohrungen 11, welche bei benachbarten Filterplatten 35 fluchtend angeordnet sind, gehen Stichbohrungen zu dem Ablaufkanal. Wie in Figur 13 beispielhaft bei der rechten unteren Ecke gezeigt, ist der Abrasionsschutzes 33 bei der Mündungsöffnung einer solchen Stichbohrung angeordnet.

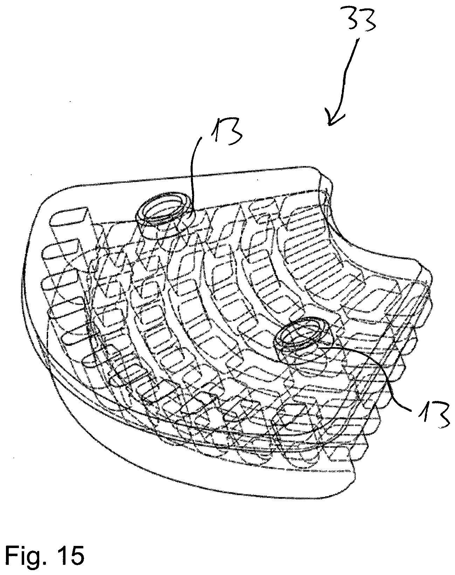

Zur Befestigung des Abrasionsschutzes 33 sind, wie in Figur 14 gezeigt, bei der Filterplatte 34 zwei Kugelzapfen 12 ausgebildet und, wie in Figur 15 gezeigt, bei dem Abrasionsschutz 33 zwei Kupplungen 13 ausgebildet. Die Kugelzapfen 12 und die Kupplungen 13 stellen eine Schnappverbindung bereit, über welche der Abrasionsschutz 33 mit der Filterplatten 34 verbunden und mittels elastischer Kräfte an dieser gehalten werden kann. Alternativ könnte der Abrasionsschutzes 33 auch wie bei dem in Figur 7 gezeigten Ausführungsbeispiel mittels einer Ringnut 23 und einem ringförmigen zapfenartigen Vorsprung 24 mit der Filterplatten 34 verbunden werden.

Bei anderen Ausführungsbeispielen werden andere Anbauteile an der Filterplatte über zumindest eine vorstehend beschriebene lösbare Schnappverbindung bei einem Kanal zur Filterkammer 6 befestigt. Beispielsweise kann der Stützring 10 auf diese Weise an dem Grundkörper 4 befestigt werden. Des Weiteren kann eine Schutzabdeckung für ein Filtertuch 7 über eine lösbare Schnappverbindung an einer der Filterplatten 2 und 3 befestigt werden.

Ferner kann das Anbauteil als Stütznocken ausgebildet sein. Wie der Verteilerring 9 kann der Stütznocken in Querrichtung hervorstehen. Er dient zur Abstützung eines Bodens der Filterplatte 2 an einem entsprechenden Stütznocken eines gegenüberliegenden Bodens einer benachbarten Filterplatte 3 in einer Filterpresse. Der Stütznocken kann über zumindest eine vorstehend beschriebene lösbare Kugeltyp-Schnappverbindung mit der Filterplatte 2, 3 verbunden sein. In dem Stütznocken kann auch eine Öffnung ausgebildet sein, sodass er die Öffnung des Einlaufkanals 5 umgibt.

Des Weiteren kann eine Membran, zum Beispiel im Bereich der vier Ecken, über die vorstehend beschriebenen lösbaren Kugeltyp-Schnappverbindungen mit der Filterplatte 2 verbunden sein. Über diese Kugeltyp-Schnappverbindungen erfolgt eine Vorfixierung der Membran. Beim Schließen der Filterpresse wird die Membran dann endgültig festgehalten.

### BEZUGSZEICHENLISTE

- 1: Filterplattenpaket
- 2: Membranfilterplatte
- 3: Kammerfilterplatte
- 4: Grundkörper
- 5: Einlaufkanal
- 6: Filterkammer
- 7: Filtertuch
- 8: Filtrierweg
- 9, 9`: Verteilerring
- 10: Stützring
- 11: Filtratbohrung
- 12: Kugelzapfen
- 13: Kupplung
- 14: erste Anlagefläche
- 15: zweite Anlagefläche
- 16: kugelartiges Abschlusselement
- 17: Bolzen
- 18: Ringdichtung
- 19: Kugelpfanne
- 20: Öffnung
- 21: Verteilungskanäle
- 22: Adapterring
- 23: Ringnut
- 24: ringförmiger zapfenartiger Vorsprung
- 25: Ringbolzen
- 26: kugelartiges ringförmiges Abschlusselement
- 27: weitere Ringnut
- 28: zweite Eintrittsöffnung
- 29: zweite Nuthohlkörper
- 30: äußere Fläche des Adapterrings
- 31: Innenfläche des Adapterrings
- 32: Filterkammerbegrenzungsfläche
- 33: Abrasionsschutz
- 34: Ablaufkanal
- 35: Filterplatte

## Patentansprüche

1. Anordnung einer Filterplatte (3, 35) für eine Filterpresse und mindestens eines Anbauteils (9, 10, 33), wobei
die Filterplatte (3) eine Filterkammerbegrenzungsfläche (32) aufweist, mit welcher eine in der Filterpresse zu bildende Filterkammer (6) begrenzbar ist,
in der Filterplatte (3, 35) zumindest ein Kanal für eine Fluidverbindung zu der Filterkammerbegrenzungsfläche (32) ausgebildet ist und
das Anbauteil (9, 10, 33) bei dem Kanal an der Filterplatte (3, 35) befestigt ist,
**dadurch gekennzeichnet,**
**dass** das Anbauteil (9, 10, 33) mittels zumindest einer lösbaren Kugeltyp-Schnappverbindung (12, 13) lösbar an der Filterplatte (3) befestigt ist und
**dass** die Kugeltyp-Schnappverbindung (12, 13) zumindest einen Kugelzapfen (12) und zumindest eine Kupplung (13) umfasst.

2. Anordnung nach Anspruch 1,
**dadurch gekennzeichnet,**
**dass** das Anbauteil (9, 10, 33) eine Öffnung (20) aufweist, die in dem Kanal angeordnet ist.

3. Anordnung nach Anspruch 1 oder 2,
**dadurch gekennzeichnet,**
**dass** das Anbauteil (9, 10, 33) ein Verteilerring (9) und der Kanal ein Einlaufkanal (5) zum Zuführen der zu filternden Suspension in die Filterkammer (6) ist, wobei mittels dem Verteilerring (9) die zu filternde Suspension der Filterkammer (6) zuführbar ist.

4. Anordnung nach einem der Ansprüche 2 oder 3,
**dadurch gekennzeichnet,**
**dass** die Filterplatte (3, 35) um eine den Kanal bildende Öffnung eine erste Anlagefläche (14) und das Anbauteil (9, 10, 33) um die Öffnung (20) eine zweite Anlagefläche (15) aufweist und dass die Kugeltyp-Schnappverbindung (12, 13) im Bereich der Anlageflächen (14, 15) gebildet ist, so dass bei einer Verbindung des Anbauteils (9, 10, 33) mit der Filterplatte (3, 35) die Anlageflächen (14, 15) aneinander anliegend gehalten werden.

5. Anordnung nach einem der vorhergehenden Ansprüche ,
**dadurch gekennzeichnet,**
**dass** der Kugelzapfen (12) einen Bolzen (17) aufweist, an den sich ein kugelartiges Abschlusselement (16) anschließt, und die Kupplung (13) eine Kugelpfanne (19) zur Aufnahme des kugelartigen Abschlusselements (16) aufweist.

6. Anordnung nach einem der vorhergehenden Ansprüche ,
**dadurch gekennzeichnet,**
**dass** das Anbauteil (9, 10, 33) mittels mehrerer Kugelzapfen (12) und korrespondierenden Kupplungen (13) an der Filterplatte (3) befestigt ist, wobei die Kugelzapfen (12) und die korrespondierenden Kupplungen (13) um eine Öffnung (20) des Anbauteils (9, 10, 33) und einer Mündungsöffnung des Kanals (5) herum angeordnet sind.

7. Anordnung einer Filterplatte (3, 35) für eine Filterpresse und mindestens eines Anbauteils (9, 10, 33), wobei
die Filterplatte (3) eine Filterkammerbegrenzungsfläche (32) aufweist, mit welcher eine in der Filterpresse zu bildende Filterkammer (6) begrenzbar ist,
in der Filterplatte (3, 35) zumindest ein Kanal für eine Fluidverbindung zu der Filterkammerbegrenzungsfläche (32) ausgebildet ist und
das Anbauteil (9, 10, 33) bei dem Kanal an der Filterplatte (3, 35) befestigt ist,
wobei das Anbauteil (9, 10, 33) mittels zumindest einer Schnappverbindung (12, 13) lösbar an der Filterplatte (3) befestigt ist und
wobei das Anbauteil (9, 10, 33) eine Öffnung (20) aufweist, die in dem Kanal angeordnet ist,
**dadurch gekennzeichnet,**
**dass** das Anbauteil (9, 10, 33) mittels zumindest einer lösbaren Kugeltyp-Schnappverbindung (23, 24) an der Filterplatte (3) befestigt ist,
wobei die Kugeltyp-Schnappverbindung (23, 24) einen ringförmigen zapfenartigen Vorsprung (24) und eine dem Vorsprung (24) zugeordnete Ringnut (23) umfasst,
wobei der ringförmige zapfenartige Vorsprung (24) an dem Anbauteil (9, 10, 33) und die Ringnut (23) an der Filterplatte (3) angeordnet ist oder der ringförmige zapfenartige Vorsprung (24) an der Filterplatte (3) und die Ringnut (23) an dem Anbauteil (9, 10, 33) angeordnet ist,
wobei der ringförmige zapfenartige Vorsprung (24) in einem senkrecht zur seiner Umfangsrichtung gebildeten Querschnitt einen Ringbolzen (25) aufweist, an den sich ein kugelartiges ringförmiges Abschlusselement (26) anschließt, das in einer Weise kugelartig ausgebildet ist, dass es bei zumindest einem Querschnitt eine kreisähnliche Umfangslinie aufweist, und
wobei die Kugeltyp-Schnappverbindung (23, 24) ferner einen ringförmigen Adapterring (22) umfasst, der korrespondierend zur Ringnut (23) ausgebildet ist.

8. Anordnung nach Anspruch 7,
**dadurch gekennzeichnet,**
**dass** die Ringnut (23) eine ringförmige erste Eintrittsöffnung zu einem ringförmigen ersten Nuthohlkörper aufweist, wobei die maximale Quererstreckung der ersten Eintrittsöffnung in einem senkrecht zur Umfangsrichtung der Ringnut (23) gebildeten Querschnitt kleiner als die maximale Quererstreckung des ersten Nuthohlkörpers bei diesem Querschnitt ist.

9. Anordnung nach einem der Ansprüche 7 bis 8,
**dadurch gekennzeichnet,**
**dass** der Adapterring (22) in einem senkrecht zu seiner Umfangsrichtung gebildeten Querschnitt eine äußere Fläche (30) aufweist, die zur Innenfläche der Ringnut (23) korrespondiert, so dass der Adapterring (22) in die Ringnut (23) einsetzbar ist, und in dem Adapterring (22) eine weitere Ringnut (27) gebildet ist, die eine ringförmige zweite Eintrittsöffnung (28) zu einem ringförmigen zweiten Nuthohlkörper (29) aufweist, wobei die maximale Quererstreckung (A) der zweiten Eintrittsöffnung (28) in einem senkrecht zur Umfangsrichtung des Adapterrings (22) gebildeten Querschnitt kleiner als die maximale Quererstreckung (F) des zweiten Nuthohlkörpers (29) bei diesem Querschnitt ist.

10. Anordnung nach einem der Ansprüche 7 bis 9,
**dadurch gekennzeichnet,**
**dass** das Anbauteil (9, 10, 33) ein Stützring (10) und der Kanal ein Einlaufkanal (5) zum Zuführen der zu filternden Suspension in die Filterkammer (6) ist, wobei der Stützring (10) benachbart zu einem Verteilerring (9) angeordnet ist, durch den die zu filternde Suspension der Filterkammer (6) zuführbar ist.

11. Anordnung nach einem der Ansprüche 7 bis 10,
**dadurch gekennzeichnet,**
**dass** die Filterplatte (3, 35) um eine den Kanal bildende Öffnung eine erste Anlagefläche (14) und das Anbauteil (9, 10, 33) um die Öffnung (20) eine zweite Anlagefläche (15) aufweist und dass die Kugeltyp-Schnappverbindung (23, 24) im Bereich der Anlageflächen (14, 15) gebildet ist, so dass bei einer Verbindung des Anbauteils (9, 10, 33) mit der Filterplatte (3, 35) die Anlageflächen (14, 15) aneinander anliegend gehalten werden.

## Claims

1. Arrangement of a filter plate (3, 35) for a filter press and at least one attachment part (9, 10, 33), wherein
the filter plate (3) comprises a filter-chamber boundary surface (32), via which a filter chamber (6) to be formed in the filter press can be limited,
in the filter plate (3, 35), at least one channel is formed for a fluid connection to the filter-chamber boundary surface (32)
and the attachment part (9, 10, 33) is attached to the filter plate (3, 35) at the channel,
**characterized in that**
the attachment part (9, 10, 33) is detachably attached to the filter plate (3) by means of at least one detachable ball-type snap-on connection (12, 13) and
that the ball-type snap-on connection (12, 13) comprises at least one ball pin (12) and at least one coupling (13).

2. Arrangement according to Claim 1,
**characterized in that**
the attachment part (9, 10, 33) comprises an opening (20) which is arranged in the channel.

3. Arrangement according to Claim 1 or 2,
**characterized in that**
the attachment part (9, 10, 33) is a distributor ring (9) and the channel is an inlet channel (5) for feeding the suspension to be filtered into the filter chamber (6), wherein the suspension to be filtered can be fed to the filter chamber (6) by means of the distributor ring (9).

4. Arrangement according to any one of the Claims 2 or 3,
**characterized in that**
the filter plate (3, 35) comprises a first contact surface (14) around an opening forming the channel, and the attachment part (9, 10, 33) comprises a second contact surface (15) around the opening (20) and that the ball-type snap-on connection (12, 13) is formed in the area of the contact surfaces (14, 15) in such a way that, when the attachment part (9, 10, 33) is connected to the filter plate (3, 35), the contact surfaces (14, 15) are maintained resting on one another.

5. Arrangement according to any one of the preceding claims,
**characterized in that**
the ball pin (12) comprises a bolt (17) to which a spherical end element (16) is attached, and the coupling (13) comprises a ball socket (19) to hold the spherical end element (16) .

6. Arrangement according to any one of the foregoing claims,
**characterized in that**
the attachment part (9, 10, 33) is attached to the filter plate (3) by means of a plurality of ball pins (12) and corresponding couplings (13), wherein the ball pins (12) and the corresponding couplings (13) are arranged around an opening (20) of the attachment part (9, 10, 33) and a orifice of the channel (5).

7. Arrangement of a filter plate (3, 35) for a filter press and at least one attachment part (9, 10, 33), wherein
the filter plate (3) comprises a filter-chamber boundary surface (32), via which a filter chamber (6) to be formed in the filter press can be limited,
at least one channel for a fluid connection to the filter-chamber boundary surface (32) is formed in the filter plate (3, 35), and
the attachment part (9, 10, 33) is attached to the filter plate (3, 35) in the channel,
wherein the attachment part (9, 10, 33) is detachably attached to the filter plate (3) by means of at least one snap connection (12, 13) and
wherein the attachment part (9, 10, 33) comprises an opening (20) arranged in the channel,
**characterized in that**
the attachment part (9, 10, 33) is attached to the filter plate (3) by means of at least one detachable ball-type snap-on connection (23, 24),
wherein the ball-type snap-on connection (23, 24) comprises a annular cone-like projection (24) and a annular groove (23) assigned to the projection (24),
wherein the annular cone-like projection (24) is arranged on the attachment part (9, 10, 33) and the annular groove (23) is arranged on the filter plate (3), or the annular cone-like projection (24) is arranged on the filter plate (3) and the annular groove (23) is arranged on the attachment part (9, 10, 33),
wherein the annular cone-shaped projection (24) in a cross-section formed perpendicular to its circumferential direction comprises an eyebolt (25) adjoined by a spherical annular connector element (26) which is spherical in such a way that it comprises a circular-like circumferential line in the case of at least one cross-section, and
wherein the ball-type snap-on connection (23, 24) furthermore comprises a ring-shaped adapter ring (22), which is formed corresponding to the annular groove (23) .

8. Arrangement according to Claim 7,
**characterized in that**
the annular groove (23) comprises a first ring-shaped inlet opening to a first ring-shaped grooved hollow body, wherein the maximum transverse extension of the first inlet opening in a cross-section formed perpendicular to the circumferential direction of the annular groove (23) is less than the maximum transverse extension of the first ring-shaped grooved hollow body in the case of this cross-section.

9. Arrangement according to any one of the Claims 7 to 8,
**characterized in that**
the adapter ring (22) comprises an outer surface (30) in a cross-section formed perpendicular to its circumferential direction that corresponds to the inner surface of the annular groove (23) in such a way that the adapter ring (22) can be inserted into the annular groove (23), and another is formed in the adapter ring (22), which annular groove (27) comprises a second ring-shaped inlet opening (28) to a second ring-shaped grooved hollow body (29), wherein the maximum transverse extension (A) of the second inlet opening (28) in a cross-section formed perpendicular to the circumferential direction of the adapter ring (22) is less than the maximum transverse extension (F) of the second ring-shaped grooved hollow body (29) in the case of this cross-section.

10. Arrangement according to any one of the Claims 7 to 9,
**characterized in that**
the attachment part (9, 10, 33) is a support ring (10), and the channel is an inlet channel (5) for feeding the suspension to be filtered into the filter chamber (6), wherein the support ring (10) is arranged adjacent to a distributor ring (9) via which the suspension to be filtered can be fed to the filter chamber (6).

11. Arrangement according to any one of claims 7 to 10
**characterized in that**
the filter plate (3, 35) comprises a first contact surface (14) around an opening forming the channel and the attachment part (9, 10, 33) comprises a second contact surface (15) around the opening (20), and that the ball-type snap-on connection (23, 24) is formed in the area of the contact surfaces (14, 15) in such a way that, when the attachment part (9, 10, 33) is connected to the filter plate (3, 35), the contact surfaces (14, 15) are maintained resting on one another.

## Revendications

1. Agencement d'une plaque filtrante (3, 35) pour un filtre-presse et d'au moins une pièce rapportée (9, 10, 33),
la plaque filtrante (3) comportant une surface de délimitation (32) de la chambre de filtration, à l'aide de laquelle une chambre de filtration (6) qui doit être constituée dans le filtre-presse est susceptible d'être délimitée,
dans la plaque filtrante (3, 35) étant conçue au moins une canalisation pour une liaison fluidique vers la surface de délimitation (32) de la chambre de filtration et
la pièce rapportée (9, 10, 33) étant fixée près de la canalisation sur la plaque filtrante (3, 35),
**caractérisé**
**en ce que** la pièce rapportée (9, 10, 33) est fixée de manière amovible au moyen d'au moins un assemblage par encliquetage (12, 13) de type sphère amovible sur la plaque filtrante (3) et
**en ce que** l'assemblage par encliquetage (12, 13) de type sphère comprend au moins un pivot sphérique (12) et au moins un accouplement (13).

2. Agencement selon la revendication 1,
**caractérisé**
**en ce que** la pièce rapportée (9, 10, 33) comporte un orifice (20), qui est placé dans la canalisation.

3. Agencement selon la revendication 1 ou 2,
**caractérisé**
**en ce que** la pièce rapportée (9, 10, 33) est une bague distributrice (9) et la canalisation est une canalisation d'entrée (5), destinée à alimenter la suspension qui doit être filtrée dans la chambre de filtration (6), au moyen de la bague distributrice (9), la suspension qui doit être filtrée étant susceptible d'être alimentée vers la chambre de filtration (6).

4. Agencement selon l'une quelconque des revendications 2 ou 3,
**caractérisé**
**en ce que** la plaque filtrante (3, 35) comporte autour d'un orifice constituant la canalisation une première surface d'appui (14) et la pièce rapportée (9, 10, 33) comporte autour de l'orifice (20) une deuxième surface d'appui (15) et **en ce que** l'assemblage par encliquetage (12, 13) de type sphère est constitué dans la zone des surfaces d'appui (14, 15), de telle sorte, que lors d'un assemblage de la pièce rapportée (9, 10, 33) avec la plaque filtrante (3, 35), les surfaces d'appui (14, 15) soient maintenues en étant appuyées l'une sur l'autre.

5. Agencement selon l'une quelconque des revendications précédentes,
**caractérisé**
**en ce que** le pivot sphérique (12) comporte un boulon (17) sur lequel se termine un élément de terminaison (16) de type sphère et l'accouplement (13) comporte une calotte sphérique (19), destinée à recevoir l'élément de terminaison (16) de type sphère.

6. Agencement selon l'une quelconque des revendications précédentes,
**caractérisé**
**en ce que** la pièce rapportée (9, 10, 33) est fixée sur la plaque filtrante (3) au moyen de plusieurs pivots sphériques (12) et accouplements (13) correspondants, les pivots sphériques (12) et les accouplements (13) correspondants étant placés autour d'un orifice (20) de la pièce rapportée (9, 10, 33) et d'un orifice d'embouchure de la canalisation (5).

7. Agencement d'une plaque filtrante (3, 35) pour un filtre-presse et d'au moins une pièce rapportée (9, 10, 33),
la plaque filtrante (3) comportant une surface de délimitation (32) d'une chambre de filtration, à l'aide de laquelle une chambre de filtration (6) qui doit être constituée dans le filtre-presse est susceptible d'être délimitée,
dans la plaque filtrante (3, 35) étant conçue au moins une canalisation pour une liaison fluidique vers la surface de délimitation (32) de la chambre de filtration et
la pièce rapportée (9, 10, 33) étant fixée près de la canalisation sur la plaque filtrante (3, 35),
la pièce rapportée (9, 10, 33) étant fixée de manière amovible au moyen d'au moins un assemblage par encliquetage (12, 13) sur la plaque filtrante (3) et
la pièce rapportée (9, 10, 33) comportant un orifice (20) qui est placé dans la canalisation,
**caractérisé**
**en ce que** la pièce rapportée (9, 10, 33) est fixée au moyen d'au moins une assemblage par encliquetage (23, 24) de type sphère amovible sur la plaque filtrante (3),
l'assemblage par encliquetage (23, 24) de type sphère comprenant une saillie (24) de forme annulaire de type pivot et une rainure annulaire (23) associée à la saillie (24),
la saillie (24) de forme annulaire de type pivot étant placée sur la pièce rapportée (9, 10, 33) et la rainure annulaire (23) étant placée sur la plaque filtrante (3) ou la saillie (24) de forme annulaire de type pivot étant placée sur la plaque filtrante (3) et la rainure annulaire (23) étant placée sur la pièce rapportée (9, 10, 33),
la saillie (24) de forme annulaire de type pivot comportant sur une section transversale constituée à la perpendiculaire de sa direction périphérique un boulon (25) annulaire, sur lequel se raccorde un élément de terminaison (26) de forme annulaire de type sphère, qui est conçu de forme sphérique de manière à comporter sur au moins une section transversale une ligne périphérique quasi-circulaire, et
l'assemblage par encliquetage (23, 24) de type sphère comprenant par ailleurs une bague d'adaptation (22) de forme annulaire, qui est conçue en correspondance avec la rainure annulaire (23).

8. Agencement selon la revendication 7,
**caractérisé**
**en ce que** la rainure annulaire (23) comporte un premier orifice de forme annulaire d'entrée sur un premier corps creux rainuré, l'extension transversale maximale du premier orifice d'entrée dans une section transversale constituée à la perpendiculaire de la direction périphérique de la rainure annulaire (23) étant inférieure à l'extension transversale maximale du premier corps creux rainuré sur cette section transversale.

9. Agencement selon l'une quelconque des revendications 7 à 8,
**caractérisé**
**en ce que** la bague d'adaptation (22) comporte dans une section transversale constituée à la perpendiculaire de sa direction périphérique une surface (30) externe qui correspond à la surface interne de la rainure annulaire (23), de telle sorte que la bague d'adaptation (22) soit insérable dans la rainure annulaire (23), et dans la bague d'adaptation (22) étant constituée une autre rainure annulaire (27), qui comporte un deuxième orifice d'entrée (28) de forme annulaire sur un deuxième corps creux rainuré (29) de forme annulaire, dans une section transversale constituée à la perpendiculaire de la direction périphérique de la bague d'adaptation (22), l'extension transversale (A) maximale du deuxième orifice d'entrée (28) étant inférieure à l'extension transversale (F) maximale du deuxième corps creux rainuré (29) sur cette section transversale.

10. Agencement selon l'une quelconque des revendications 7 à 9,
**caractérisé**
**en ce que** la pièce rapportée (9, 10, 33) est une bague de soutien (10) et la canalisation est une canalisation d'entrée (5), destinée à alimenter la suspension qui doit être filtrée dans la chambre de filtration (6), la bague de soutien (10) étant placée au voisinage d'une bague distributrice (9) à travers laquelle la suspension qui doit être filtrée est susceptible d'être alimentée vers la chambre de filtration (6).

11. Agencement selon l'une quelconque des revendications 7 à 10,
**caractérisé**
**en ce que** la plaque filtrante (3, 35) comporte autour d'un orifice constituant la canalisation une première surface d'appui (14) et la pièce rapportée (9, 10, 33) comporte autour de l'orifice (20) une deuxième surface d'appui (15) et **en ce que** l'assemblage par encliquetage (23, 24) de type sphère est constitué dans la zone des surfaces d'appui (14, 15), de telle sorte, que lors d'un assemblage de la pièce rapportée (9, 10, 33) avec la plaque filtrante (3, 35), les surfaces d'appui (14, 15) soient maintenues en étant appuyées l'une sur l'autre.
